# DEMANDE DE BREVET EUROPEEN

(11) **EP 4 568 103 A1**
(43) Date de publication de la demande: **11.06.2025**
(21) Numéro de dépôt: 24218124.6
(22) Date de dépôt: 06.12.2024
(51) Int. Cl.: H02S 50/10

(54) **DISPOSITIF DE CONNEXION A CONTACTS ADAPTABLES POUR LE TEST ELECTRIQUE D'UNE CELLULE SOLAIRE ET PROCEDE DE TEST ASSOCIE**

(30) Priorité: 08.12.2023 FR 2313865
(71) Demandeur: Commissariat à l'Energie Atomique et aux Energies Alternatives, 75015 Paris (FR)
(72) Inventeur: DEBOURDEAU, Mathieu, 38054 GRENOBLE Cedex 09 (FR); DETRAZ, Hugo, 38054 GRENOBLE Cedex 09 (FR)
(74) Mandataire: Brevalex

(57) **Abrégé**

Dispositif pour établir un contact électrique entre une cellule photovoltaïque et un dispositif de mesure de tension et/ou de courant, comprenant :
- une nappe (10) de fils conducteurs (12 ; 121, 12U ; 128) distincts et déplaçables qui, dans une position de mesure sont disposés en contact avec une première face (FAV, FAR) d'une cellule photovoltaïque (C, C1, C2) et dans une position de déconnexion sont maintenus à distance de la première face (FAV, FAR) et parallèlement à cette première face,
- un dispositif d'actionnement (25) amélioré doté d'un ensemble d'actionneurs (25A, 25B) des fils, chaque actionneur (25) étant associé à un fil conducteur donné (12I, 12U, 128) de la nappe et configuré pour permettre de déplacer le fil conducteur donné, entre une première position et une deuxième position parmi la position de déconnexion et la position de mesure.

## Description

### DOMAINE TECHNIQUE ET ART ANTERIEUR

La présente demande se rapporte de manière générale au test de dispositifs photovoltaïques, et plus particulièrement à celui des dispositifs permettant d'établir des contacts électriques avec une cellule photovoltaïque, et plus particulièrement une cellule photovoltaïque à base de silicium cristallin, dont on souhaite mesurer un ou plusieurs paramètres électriques.

Habituellement, à la fin d'un processus de fabrication des cellules solaires encore appelées cellules photovoltaïques, et typiquement avant qu'elles ne soient assemblées en module solaire, les cellules sont testées afin de déterminer leur qualité. Différentes techniques de mesure existent pour évaluer les propriétés d'une cellule, parmi lesquelles l'imagerie par électroluminescence, l'imagerie thermique et la mesure de courant et tension pour établir une relation courant tension et en déduire une courbe correspondante communément appelée « courbe IV ».

Cette dernière technique consiste à effectuer une mesure électrique sous insolation tandis la cellule sous insolation est connectée électriquement à un appareil de mesure doté de moyens de mesure de courant et de tension. La cellule est connectée à l'appareil de mesure et lors de l'éclairage de la cellule, des mesures électriques sont effectuées. L'appareil de mesure permet d'effectuer un relevé des tensions et courants de la cellule et d'établir une relation courant tension de laquelle on peut déduire d'autres paramètres tels que par exemple sa tension à vide : Vco représentant la tension générée par une cellule éclairée non raccordée, son courant de court-circuit: Isc représentant le courant généré par une cellule éclairée raccordée à elle-même, son point de puissance maximal: MPP (en anglais : maximal power point) obtenu pour une tension et un courant optimaux : Vopt, lopt (parfois notés Vmpp, Impp), le facteur de remplissage FF (de l'anglais « fill factor ») correspondant au rapport entre la puissance maximale MPP et le produit de la tension de circuit ouvert Vco et de l'intensité de courant de court-circuit Isc.

Outre une source de lumière émettant typiquement avec un spectre semblable à celui du soleil pour effectuer un tel type de mesure, on utilise un dispositif de connexion doté d'éléments conducteurs permettant établir des contacts électriques entre la cellule et l'appareil de mesure.

Le document "GridTOUCH: Innovative Solution for Accurate IV Measurement of Busbarless Cells in Production and Laboratory Environments", Bassi et al. Conférence: 29th European Photovoltaic Solar Energy Conférence and Exhibition Janvier 2014, présente un exemple de dispositif de connexion sous forme d'un ensemble de fils conducteurs agencés en une nappe de fils parallèles disposés contre une cellule à tester.

Un tel dispositif permettant le contact électrique entre la cellule et une ou plusieurs cartes électroniques peut être formé par exemple, en face avant de la cellule, de 30 fils conducteurs dédiés à une mesure de courant et de 5 fils dédiés à une mesure de tension. Pour tester la cellule en face arrière, on peut prévoir par exemple 24 fils dédiés à la mesure de courant et 5 fils dédiés à une mesure de tension. Une telle densité de contacts peut permettre de ne pas devoir prendre en compte la résistance de ligne de la cellule et ainsi d'améliorer la mesure.

Un tel dispositif peut être adapté à différents agencements de métallisation des cellules en barre d'interconnexions (« bus-bars » selon la terminologie anglo-saxonne) et doigts conducteurs (« fingers »), voire à des cellules sans métallisation.

Toutefois, cette adaptation peut nécessiter un démontage du dispositif de connexion long à réaliser car, en position de mesure, les fils sont maintenus en pression sur la cellule par un système formé par exemple de vis.

Il existe donc un besoin de pouvoir tester des cellules solaires dont les agencements de métallisation respectifs diffèrent de manière importante l'une de l'autre sans perdre trop de temps entre les différentes étapes de test effectuées sur ces cellules.

De même, il existe un besoin de pouvoir réaliser des tests sur des cellules de différents formats, et là encore de préférence tout en limitant le temps d'adaptation du système de mesure.

### EXPOSÉ DE L'INVENTION

C'est par conséquent un but de la présente invention d'offrir un dispositif comprenant :
- une nappe de fils conducteurs distincts et déplaçables qui, dans une position dite « de mesure », sont aptes à être disposés en contact avec une première face d'une cellule photovoltaïque et, qui dans une position dite « de déconnexion », sont aptes à être maintenus à distance de la première face d'une cellule photovoltaïque et avantageusement parallèlement à cette première face,
- un dispositif d'actionnement doté d'un ensemble d'actionneurs des fils conducteurs de la nappe, chaque actionneur étant associé à un fil conducteur donné de la nappe et configuré pour permettre de déplacer le fil conducteur donné, entre une première position parmi la position de mesure et la position de déconnexion et une deuxième position parmi la position de déconnexion et la position de mesure ; la deuxième position étant distincte de la première position, et pour déplacer le fil conducteur donné entre la deuxième position et la première position.

Le dispositif d'actionnement peut être configuré en outre pour maintenir un premier fil conducteur de la nappe associé à au moins un premier actionneur dans la première position tandis qu'un deuxième fil conducteur de la nappe associé à au moins un deuxième actionneur est maintenu dans la deuxième position.

Avec un tel dispositif, on peut adapter le nombre de contacts sur une cellule aisément et on peut effectuer rapidement une série de tests électriques sur une ou plusieurs cellules photovoltaïques. On peut réaliser avantageusement des mesures sur des cellules de formats différents et/ou ayant des métallisations différentes avec la même nappe d'élément conducteurs dont on modifie le positionnement des fils en fonction du format ou de la métallisation.

Selon un aspect particulièrement avantageux, le dispositif peut comprendre en outre°:
- un dispositif de commutation couplé aux fils conducteurs de la nappe et comportant un ensemble d'éléments de commutation, chaque élément de commutation étant configuré pour, alternativement adopter une première configuration connectant une entrée apte à être couplée à un fil conducteur de la nappe à une première sortie apte à être reliée à un dispositif de mesure de courant tout en déconnectant l'entrée d'une deuxième sortie apte à être reliée à un dispositif de mesure de tension, et une deuxième configuration connectant l'entrée à la deuxième sortie tout en déconnectant l'entrée de la première sortie.

Avec un tel dispositif, on peut adapter l'association d'un contact avec un moyen de mesure de tension ou de courant, rapidement et sans que cela ne nécessite de démontage. Cela participe donc également à la possibilité d'effectuer rapidement une série de tests électriques sur une ou plusieurs cellules photovoltaïques. La mise en oeuvre d'un tel dispositif participe également au fait de pouvoir réaliser aisément des mesures sur des cellules de formats différents avec la même nappe d'élément conducteurs dont on peut rapidement modifier l'association de chaque fil à un moyen de mesure de tension ou de courant.

Selon une possibilité de mise en oeuvre, le dispositif peut comprendre en en outre : une deuxième nappe de fils conducteurs distincts qui, dans la position dite « de mesure » sont disposés en contact avec une deuxième face entre la face arrière et la face avant et qui est distincte de la première face.

De préférence, le dispositif d'actionnement est également couplé à cette deuxième nappe et doté en outre d'un deuxième ensemble d'actionneurs pour déplacer individuellement les fils de la deuxième nappe.

De préférence également, la deuxième nappe est couplée au dispositif de commutation de sorte que l'on peut sélectionner pour chaque fil conducteur de la deuxième nappe, à quel moyen de mesure, de tension ou de courant, l'associer.

Un dispositif de contrôle muni d'une unité de traitement informatique et/ou électronique, couplée à un circuit d'interface, l'unité de traitement couplée au circuit d'interface étant configurée pour contrôler le dispositif d'actionnement et/ou le dispositif de commutation, peut être également prévu.

Un tel dispositif de contrôle peut être ainsi configuré pour émettre un signal de commande d'actionneur(s) du dispositif d'actionnement à destination d'au moins un actionneur donné pour déclencher un déplacement d'au moins un fil conducteur donné par l'actionneur donné.

Un tel dispositif de contrôle peut être en variante ou en combinaison configuré pour émettre un signal de commande du dispositif de commutation de sorte à déclencher un changement de configuration d'au moins un élément de commutation donné et à faire commuter l'élément de commutation donné de la première configuration vers la deuxième configuration ou de la deuxième configuration vers la première configuration.

Selon une possibilité, le dispositif de contrôle d'actionneur et des éléments de commutation peut comprend en outre une interface homme-machine.

Une telle interface peut être apte à recevoir une instruction de déplacement de fil en provenance d'un utilisateur indiquant qu'au moins un fil conducteur donné de la nappe est à déplacer vers ou hors d'une position de mesure. L'unité de traitement couplée au circuit d'interface peuvent être alors configurés pour, consécutivement à la réception de l'instruction de déplacement de fil, émettre un signal de commande d'actionneur au dispositif d'actionnement de sorte à déclencher un déplacement du fil conducteur donné par au moins un actionneur associé au fil conducteur donné.

Une telle interface peut être également apte à recevoir une instruction d'association de fils à un type de dispositif de mesure donné entre un dispositif de mesure de tension et un dispositif de mesure de courant. Dans ce cas, l'unité de traitement couplée au circuit d'interface peuvent être configurée pour consécutivement à la réception de l'instruction d'association de fil à un type de dispositif de mesure donné, émettre un signal électrique ou électronique de commande à destination du dispositif de commutation, de sorte à déclencher un changement de configuration d'au moins un élément de commutation donné associé au fil conducteur donné.

Une instruction de déplacement de fil et une instruction d'association de fil à un type de dispositif mesure donné peuvent être regroupées dans une même commande.

Le dispositif de contrôle peut être configuré pour déclencher un déplacement d'un ensemble de fils conducteurs de la nappe hors de la position de mesure de sorte à déconnecter l'ensemble de la cellule photovoltaïque tout en maintenant un groupe de fils conducteurs de la nappe dans la position de mesure ou à déplacer dans la position de mesure l'ensemble de fils conducteurs de sorte à connecter l'ensemble avec la cellule photovoltaïque tout en maintenant un groupe de fils conducteurs de la nappe dans la position de mesure, le dispositif de contrôle étant configuré en outre pour déclencher une connexion d'un ou plusieurs premiers fils conducteurs du groupe à un dispositif de mesure de courant en mettant un ou plusieurs premiers éléments de commutation du dispositif de commutation dans une première configuration, tandis qu'un ou plusieurs ou plusieurs deuxièmes fils conducteurs du groupe sont connectés à un dispositif de mesure de tension par l'intermédiaire d'un ou plusieurs deuxièmes éléments de commutation du dispositif de commutation mis dans une deuxième configuration, le dispositif de contrôle étant configuré en outre pour déclencher une modification de la configuration d'un ou plusieurs éléments de commutation donnés parmi les premiers éléments de commutation et/ou les deuxièmes éléments de commutation du dispositif de commutation.

Selon une possibilité de mise en oeuvre, le dispositif peut être doté en outre de capteurs de pression, pour mesurer l'effort exercé par les fils sur la cellule que ces fils permettent de contacter.

Ainsi dans une position de mesure, une première région d'extrémité d'un fil conducteur donné est maintenue contre un premier capteur de pression et une deuxième région d'extrémité du fil conducteur est maintenue contre un deuxième capteur de pression.

Les actionneurs peuvent être des actionneurs linéaires. On peut prévoir une par d'actionneur par fil conducteur.

Selon une possibilité, les actionneurs d'un fil peuvent comporter :
- un premier électro-aimant destiné à être placé en regard d'une première région d'extrémité d'un fil conducteur et un deuxième électro-aimant destiné à être placé en regard d'une deuxième région d'extrémité de ce fil conducteur ;

Selon une possibilité, les actionneurs d'un fil peuvent comporter :
- un premier vérin destiné à être placé en regard d'une première région d'extrémité d'un fil conducteur et un deuxième vérin destiné à être placé en regard d'une deuxième région d'extrémité de ce fil conducteur.

Selon un autre aspect, un mode de réalisation de la présente invention concerne un procédé pour tester électriquement au moins une cellule photovoltaïque à l'aide d'un dispositif tel que défini plus haut.

Selon un autre aspect particulier, la présente invention concerne un procédé de test électrique de cellule photovoltaïque comprenant :
- Une étape consistant à
- déplacer un ensemble de fils conducteurs de la nappe hors de la position de mesure de sorte à déconnecter une première cellule photovoltaïque de l'ensemble de fils conducteurs tout en maintenant un groupe de fils conducteurs de ladite nappe dans la position de mesure sur la première cellule photovoltaïque, ou
- déplacer dans la position de mesure ledit ensemble de fils conducteurs de sorte à connecter ledit ensemble avec ladite première cellule photovoltaïque tout en maintenant un groupe de fils conducteurs de ladite nappe dans la position de mesure, un ou plusieurs premiers fils conducteurs dudit groupe étant connectés à un dispositif de mesure de courant par l'intermédiaire d'éléments de commutation du dispositif de commutation mis dans la première configuration, tandis qu'un ou plusieurs ou plusieurs deuxièmes fils conducteurs dudit groupe sont connectés à un dispositif de mesure de tension par l'intermédiaire d'éléments de commutation dudit dispositif de commutation mis dans la deuxième configuration, puis,
- une étape consistant à
- modifier la configuration d'un ou plusieurs éléments de commutation donnés dudit dispositif de commutation, de sorte à modifier le nombre de fils conducteurs dudit groupe qui sont connectés à un dispositif de mesure de tension et à modifier le nombre de fils conducteurs dudit groupe connectés à un dispositif de mesure de courant, puis,
- une étape consistant à :
- mesurer le courant traversant au moins un fil conducteur donné dudit groupe ou la tension entre les extrémités d'au moins un fil conducteur donné dudit groupe en contact avec la première cellule photovoltaïque, tandis que la première cellule photovoltaïque est maintenue sous illumination.

Le déplacement de l'ensemble de fils conducteurs est effectué, de préférence en translation et selon une direction orthogonale à un plan principal de la cellule.

Lorsque le déplacement de l'ensemble de fils conducteurs est un déplacement hors de la position de mesure, celui-ci est effectué de sorte à aboutir à une deuxième position, l'ensemble de fils conducteurs étant alors maintenu dans la deuxième position lors de la mesure de courant ou de tension effectuée sur l'au moins un fil conducteur donné du groupe de fils en position de mesure.

Avantageusement préalablement au déplacement de l'ensemble de fils conducteurs de la nappe, le procédé peut comprendre en outre une ou plusieurs étapes consistant à :
- disposer la nappe de fils conducteurs en contact avec une autre cellule photovoltaïque, l'ensemble de fils conducteurs étant en contact avec l'autre cellule et mesurer au moins un courant ou une tension à l'aide de la nappe, tandis que l'autre cellule photovoltaïque est maintenue sous illumination.

Selon une possibilité de mise en oeuvre, l'autre cellule peut avoir un format différent de celui de la première cellule photovoltaïque.

### BRÈVE DESCRIPTION DES DESSINS

La présente invention sera mieux comprise sur la base de la description qui va suivre et des dessins en annexe sur lesquels :
La figure 1 illustre une nappe de fils conducteurs pour le test électrique d'une cellule photovoltaïque.
La figure 2 illustre une position dite « de mesure » d'un fil conducteur de la nappe sur une cellule photovoltaïque pour prendre un contact électrique et pouvoir effectuer des mesures de courant et/ou de tension sur cette cellule photovoltaïque.
La figure 3 illustre un dispositif de test sous insolation d'une cellule photovoltaïque à l'aide d'un exemple de dispositif de connexion comprenant la nappe de fils conducteurs agencés en position de mesure.
La figure 4 illustre un dispositif d'actionnement pour déplacer individuellement les fils de la nappe de fils conducteurs et pouvoir maintenir certains fils dans une position de mesure tandis que d'autres fils sont maintenus dans une autre position hors de la position de mesure, ainsi qu'un système de contrôle de ce dispositif d'actionnement.
La figure 5 illustre un agencement particulier d'actionneurs aux niveau des extrémités des fils conducteurs de la nappe de fils.
La figure 6 illustre une configuration particulière de la nappe, obtenue par déplacement de certains fils afin d'adapter le nombre de contacts sur la cellule.
La figure 7 illustre une configuration particulière de la nappe, où certains fils sont maintenus à distance afin de d'adapter le nombre de contacts au format de la cellule.
La figure 8 illustre un dispositif de mesure de pression que les fils conducteurs du dispositif de connexion sont susceptibles d'exercer sur la face d'une cellule photovoltaïque à tester.
Les figures 9A et 9B illustrent différentes possibilités de contrôle du déplacement de chaque fil conducteur et d'association de chaque fil conducteur de la nappe à un moyen de mesure sélectionné parmi un moyen de mesure de tension ou un moyen de mesure de courant.
La figure 10 illustre un exemple de structure d'élément de commutation d'un dispositif de commutation susceptible d'être intégré à un dispositif de connexion suivant l'invention pour pouvoir effectuer des mesures électriques sur une cellule solaire et alternativement relier à un contact soit à un moyen de mesure de tension soit à une mesure de courant.
La figure 11 illustre un procédé pour la mise en place d'un test électrique d'une cellule pour lequel un changement de positionnement des fils et de configuration du dispositif de commutation sont mis en oeuvre pour permettre de tester cette cellule.

En outre, dans la description ci-après, des termes qui dépendent de l'orientation d'une structure tels que « avant », « supérieure », « arrière », « inférieure », « latérale », s'appliquent en considérant que la structure est orientée de la façon illustrée sur les figures.

### EXPOSÉ DÉTAILLÉ DE MODES DE RÉALISATION PARTICULIERS

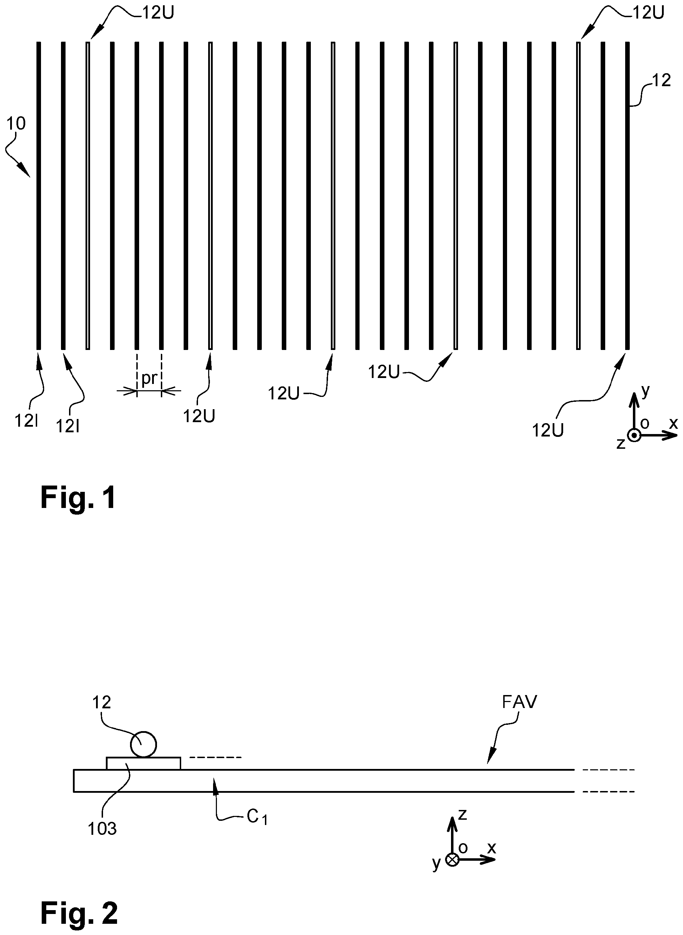

On se réfère à présent à la figure 1 servant à illustrer, par le biais d'une vue de dessus, un dispositif de connexion pour permettre à au moins un dispositif de mesure de courant et à au moins un dispositif de mesure de prendre contact sur une cellule photovoltaïque telle qu'une cellule photovoltaïque à base de silicium cristallin, (non représentée), en vue de mesurer un ou plusieurs paramètres, tels que la tension Vco, le courant Isc, le point MPP, le facteur de remplissage FF, et/ou de déterminer une relation entre courant tension pour établir une courbe IV de la cellule.

Le dispositif de connexion est doté d'une pluralité d'éléments conducteurs oblongs, en particulier des fils conducteurs 12, agencés en une nappe 10 de fils distincts, typiquement répartis à distance et parallèlement les uns par rapport aux autres, selon un pas de répartition pr donné qui peut être fixe, par exemple compris entre 2 et 15 mm, avantageusement entre 4 et 6 mm, par exemple de 5 mm. Ces fils conducteurs 12 sont destinés à contacter une face, avant ou arrière, de la cellule photovoltaïque.

Les fils conducteurs 12 utilisés peuvent être prévus avec une largeur (dimension prise parallèlement à l'axe x du repère [O;x;y;z] sur la figure 1) suffisamment faible pour permettre d'éviter un ombrage trop important sur la cellule à tester, mais suffisamment importante pour conserver une surface de contact permettant d'assurer à la fois une bonne mesure et bonne tenue mécanique. Par exemple, les fils conducteurs 12 peuvent être prévus avec un diamètre compris entre 100 et 300 µm. De préférence, les fils conducteurs 12 sont en un matériau bon conducteur électrique, typiquement métallique, et peu sensible à l'oxydation. Ainsi, les fils conducteurs 11, 12 peuvent être par exemple prévus en cuivre.

Lorsqu'il se trouve dans une position de mesure, un fil conducteur 11,12 de la nappe 10 est mis en contact avec la cellule et/ou une piste conductrice formée sur celle-ci. Ainsi, dans l'exemple illustré sur la vue en coupe de la figure 2, un fil conducteur 12 en position de mesure est disposé sur une barre 103 d'interconnexion disposée en face avant d'une FAV cellule photovoltaïque C1.

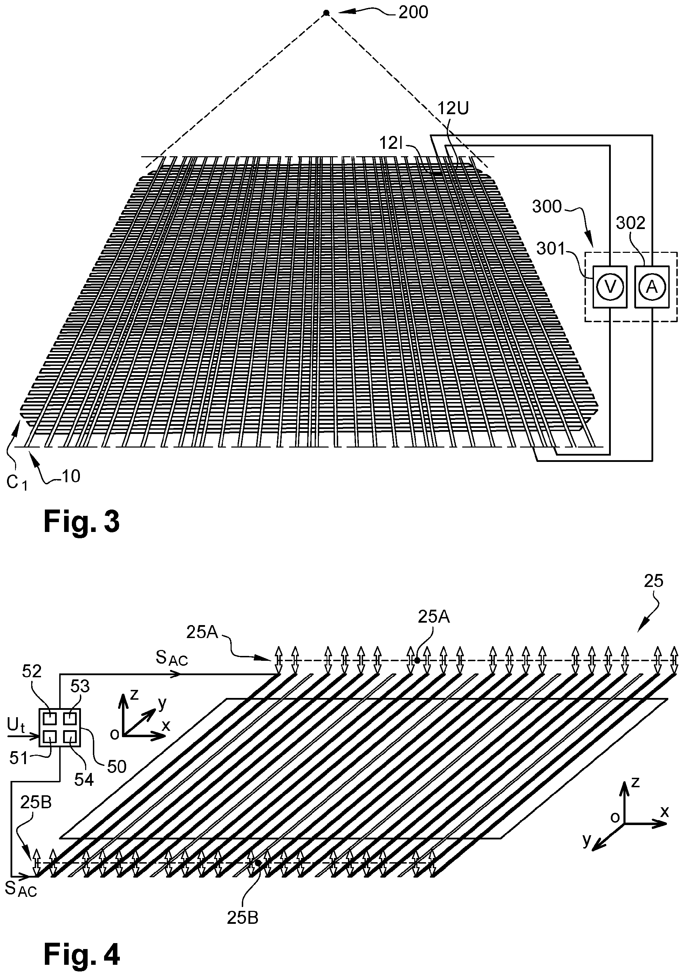

Sur la figure 3, la nappe conductrice 10 est représentée en position de mesure de l'ensemble de ses fils conducteurs sur la face avant de la cellule photovoltaïque C1 sous insolation, une source 200 de lumière, par exemple de type Xe-flash combinée à une source LED pulsée peut être prévue au-dessus de la cellule C1. La source 200 est typiquement prévue pour respecter un éclairement de classe A+A+A+ et selon la norme IEC 60904-9.

Pour des raisons de simplification, dans l'exemple illustré, seuls un fil conducteur 121 encore appelé « contact I » est relié à un dispositif de mesure 301 de courant et autre fil conducteur 12U encore appelé « contacts U » est relié à un dispositif de mesure 302 de tension. Toutefois, la nappe 10 comprend typiquement plusieurs « contacts I » 121 amenés à être reliés chacun à un dispositif de mesure de courant, et plusieurs « contacts U » 12U, susceptibles d'être reliés à un dispositif de mesure de tension. Le dispositif de mesure de tension et le dispositif de mesure de courant peuvent être intégrés à un même appareil 300 de mesure. Un tel appareil 300 de mesure peut comprendre typiquement plusieurs voies ou dispositifs de mesure de tension et plusieurs voies ou dispositifs de mesure de courant.

On prévoit typiquement une proportion de contacts I supérieure à celle de contacts U pour pouvoir réaliser des mesures électriques sur la cellule C1 sans devoir prendre en compte la résistance de ligne de la métallisation de la cellule C1 dans les mesures. Par exemple, on peut prévoir une nappe 10 comprenant entre 16 et 50, par exemple 30 fils conducteurs 12I, servant de contact I, et 5 fils conducteurs 12U servant de contact U ou par exemple 42 fils conducteurs 12I, servant de contact I, et 9 fils conducteurs 12U. On conserve de préférence un nombre de contacts U suffisant notamment pour permettre de réaliser une bonne mesure de la tension Voc de la cellule C1.

Toutefois, une mesure effectuée avec un grand nombre de contacts n'est pas nécessairement représentative de la performance de la cellule C1 une fois que celle-ci aura été intégrée à un module photovoltaïque avec d'autres cellules dans la mesure où le montage en module est réalisé avec des contacts typiquement plus espacés. On peut donc vouloir modifier le nombre de contacts pour effectuer d'autres mesures.

Ainsi, selon un aspect particulier illustré sur la figure 4, on prévoit un dispositif de connexion des fils, muni lui-même d'un dispositif d'actionnement 25 doté d'une pluralité d'actionneurs 25A, 25B, configurés pour déplacer, et en particulier déplacer en translation, individuellement chaque fil conducteur 12I, 12U de la nappe 10.

Dans l'exemple illustré, chaque fil est associé à une paire d'actionneurs 25A, 25B linéaires représentés de manière schématique par le biais d'une double flèche signifiant qu'un fil conducteur 11, 12 peut être déplacé verticalement, autrement dit dans une direction orthogonale ou sensiblement orthogonale par rapport à un plan principal de la cellule C1 ou d'un support de cellule (non représenté), entre une première position, et au moins une deuxième position, et inversement entre l'au moins deuxième position et la première position. Par « plan principal » de la cellule on entend ici et tout au long de la description un plan passant par la cellule et parallèle à un plan [O; x; y] donné sur la figure 4.

Ainsi, chaque actionneur ou paire d'actionneurs 25A, 25B de déplacement peut être configuré pour permettre de déplacer, ici verticalement, le fil conducteur auquel il/elle est associé(e) de la position de mesure vers une autre position distincte de la position de mesure et de déplacer, ici verticalement, ce même fil conducteur d'une position hors position de mesure vers la position de mesure.

Les fils conducteurs 11, 12 sont maintenus de préférence parallèles à la cellule lors de leurs déplacements par les actionneurs 25A, 25B.

Les actionneurs 25A, 25B sont typiquement des actionneurs linéaires configurés pour déplacer ici les fils conducteurs le long d'une ligne droite. Par exemple, des actionneurs utilisant un moteur électrique, qui peut être couplé à un élément, tel qu'une vis, pour convertir la rotation d'un moteur électrique en mouvement linéaire et sur lequel s'appuie le fil conducteur, peuvent être prévus.

Lorsqu'une autre nappe de fils conducteurs (non représentée sur cette figure) est prévue sur une face opposée à celle sur laquelle se situe la nappe 10, cette autre nappe peut être également couplée au dispositif d'actionnement, ce dispositif étant pourvu alors d'actionneurs supplémentaires pour pouvoir également déplacer individuellement chaque fil conducteur de cette autre nappe, par rapport aux autres fils.

Différents types d'actionneurs de déplacement de fil conducteur sont possibles.

Selon un exemple de réalisation, l'actionneur peut être doté de vérins hydrauliques ou pneumatiques : un vérin pouvant être ainsi disposé à chaque extrémité d'un fil conducteur à déplacer. Ainsi, pour une nappe dotée par exemple de 20 fils conducteurs, dotée de 20 fils conducteurs, on peut prévoit 40 vérins répartis aux extrémités des fils conducteurs 11, 12.

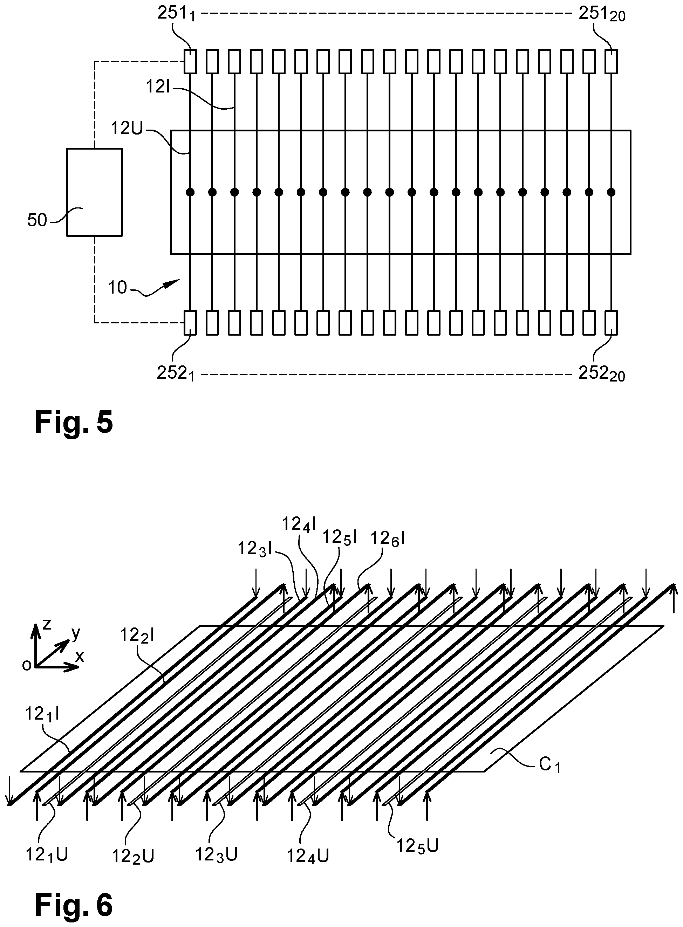

Selon un autre exemple de réalisation, un actionnement de nature électrique peut être prévu avec, par exemple, au moins un électro-aimant disposé à chaque extrémité de fil conducteur à déplacer. Ainsi, par exemple, pour une nappe 10 comme illustrée sur la figure 5 dotée par exemple de 20 fils conducteurs, on prévoit 40 électroaimants 251₁,..., 251₂₀, 252₁,..., 252₂₀ avec 20 électro-aimant 251₁,..., 251₂₀ disposés d'un côté de la nappe 10 pour déplacer une première extrémité des fils conducteurs 12I, 12U et 20 autres électro-aimant 252₁,..., 252₂₀ disposés d'un deuxième côté de la nappe 10 pour déplacer concomitamment une deuxième extrémité des fils conducteurs.

On peut sélectionner le ou les contacts à supprimer, autrement dit le ou les fils conducteurs que l'on souhaite déplacer hors de la position de mesure, par le biais d'un système de contrôle 50 couplé au dispositif d'actionnement 25.

Un système de contrôle 50, alliant électronique et informatique, comme représenté de manière schématique sur les figures 4 et 5, peut être prévu pour contrôler les actionneurs individuellement.

Sur la figure 4, le système de contrôle 50 dispose d'une interface 51 homme-machine, par exemple sous forme d'un clavier et/ou d'un écran tactile, associé à une unité de traitement 52, par exemple un objet informatisé tel qu'un ordinateur, l'unité de traitement étant composée d'au moins un processeur ou micro-processeur ou microcontrôleur. L'unité de traitement 52 peut être couplée à une ou plusieurs mémoires 53 dont une mémoire principale dotée par exemple d'une mémoire volatile, d'une mémoire non volatile. Un ou plusieurs autres éléments de stockage par exemple tels qu'un disque dur, un disque numérique polyvalent (DVD), une carte mémoire, une clé USB peuvent être également prévus. L'unité de traitement 52 est ici également couplée à un circuit d'interface 54 doté de composants pour produire des signaux électriques et/ou électronique de commande des actionneurs. Un tel circuit 54 peut prendre différentes formes et comprendre par exemple parmi ses étages ou composants au moins un parmi : un ou plusieurs transistors, un convertisseur numérique analogique, un pont en H, un circuit de commande de puissance, switch électronique en voltage, switch électronique en courant, contrôle de courant de fuite ...

Un tel système de contrôle 50 permet à un utilisateur Ut de contrôler le dispositif d'actionnement et pouvoir déclencher le déplacement d'un ou plusieurs fils sélectionnés de la nappe 10.

L'utilisateur Ut du système de contrôle 50 peut par exemple choisir quelle(s) zone(s) d'une cellule il souhaite contacter via l'interface 51 utilisateur et par conséquent quel(s) fil(s) conducteur(s) de la nappe 10 déplacer hors de la position de mesure et quel(s) fil(s) conducteur(s) déplacer ou maintenir dans la position de mesure parmi l'ensemble des fils conducteurs de la nappe 10.

Une telle sélection de contact(s) peut être également réalisée, par exemple en fonction du type de cellule photovoltaïque à tester, en particulier de son format. Par exemple, pour une cellule de format M2 (i.e. de dimensions 156,75 x 156,75mm), le système de contrôle 50 peut déclencher, via les actionneurs, une mise en position de mesure d'un nombre de fils conducteurs plus important que pour une cellule de format M1. Selon un autre exemple, pour une cellule de format M2, le système de contrôle 50 peut maintenir en position de mesure un nombre de fils conducteurs plus important que pour une demi-cellule de même format (« 1/2M2 »), le nombre de fils conducteurs mis hors de la position de mesure étant supérieur pour la demi-cellule que pour la cellule M2 entière.

En pilotant individuellement chaque fil conducteur et en mettant plus ou moins de fils conducteurs, en particulier de contacts I, en position de mesure, on tient plus ou moins en compte de la résistance de ligne du dessin de métallisation imprimé sur un précurseur, autrement dit une cellule solaire sans métallisation permettant le contact électrique.

Avec un tel système de contrôle, on peut ainsi également adapter le nombre de fils conducteurs en position de mesure afin d'établir différentes mesures d'un même paramètre, en particulier du facteur de remplissage FF sur une même cellule.

On peut vouloir moduler le nombre de contacts I, mais conserver le nombre de contacts U, par exemple pour faire une série de mesures sur une même cellule pour lesquelles le nombre de contact I diffère d'une mesure à l'autre, tout en conservant un nombre de contacts U constant d'une mesure à l'autre. Dans ce cas, le système de contrôle 50 ne pilote que les fils dédiés à la mesure de courant, tandis que les fils dédiés à la mesure de tension sont maintenus fixes et en particulier en position de mesure.

Ainsi dans un exemple de test particulier illustré sur la figure 6, pour établir une relation entre I et V on déplace hors de la position de mesure (flèche dirigée vers le haut) un ensemble de fils conducteurs 12₂I, 12₄I, 12₆I dédiés à la mesure de courant tout en maintenant (flèche dirigée vers le bas) un groupe 12I₁, 12I₃,12I₅ de fils conducteurs dédiés à la mesure de courant en contact sur la cellule C1. Les fils conducteurs 12₁U,..., 12₅U dédiés à la mesure de tension sont ici tous maintenus dans la position de mesure. D'un bout à l'autre, la nappe 10 comporte ici une alternance de fils en contact avec la cellule C1, 10₃, 10₅,..., C1₉ et situés dans un premier plan, et de fils distants de la cellule C1 et situés dans un deuxième plan distinct du premier plan.

Comme indiqué précédemment, un autre avantage lié à la possibilité d'actionnement individuel des fils, réside dans la possibilité de pouvoir s'adapter à différents formats de cellule par exemple : M2, ½ M2, , M12, ½ M12...), sans modification complexe et longue du système de mesure.

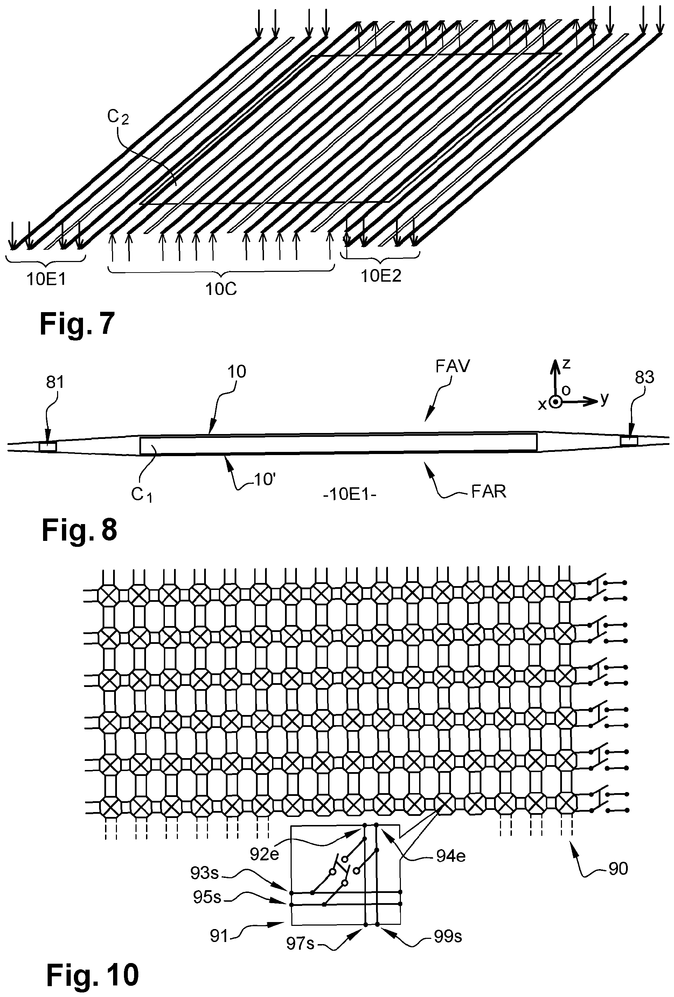

Ainsi, dans l'exemple de réalisation particulier illustré sur la figure 7, pour effectuer une mesure sur une cellule photovoltaïque C2 de plus petit format que la cellule C1 précédemment testée, on supprime le contact de fils agencés au niveau de bordures 10e1, 10e2 extérieures de la nappe 10 afin de réduire la zone de mesure. On déplace ici, à distance de la cellule C2 et par translation, tous les fils de bordures 10e1, 10e2 de la nappe dédiés à la mesure de courant et à la mesure de tension, tandis que les fils d'une partie centrale 10C de la nappe 10 sont maintenus en position de mesure.

Des exemples particuliers de configurations possibles pour différents formats en conservant un espacement entre fils adjacents ou voisins de la nappe 10 par exemple de 5 mm entre deux fils dédiés à la mesure de courant et en intercalant un fil dédié à la mesure de tension entre fils dédiés à la mesure de tension tous les 25mm, prévoient :
- 42 fils conducteurs dédiés à la mesure de courant et 9 fils conducteurs dédiés à la mesure de tension pour un format de cellule G12 (i.e. de dimensions 210 x 210mm),
- 35 fils dédiés à la mesure de courant et 7 fils dédiés à la mesure de tension pour un format M6,
- 30 fils dédiés à la mesure de courant et 5 fils dédiés à la mesure de tension pour un format M2,
- 16 fils à la mesure de courant et 3 fils dédiés à la mesure de tension pour un format ½ M2.

Dans l'un ou l'autre des exemples décrits précédemment on prévoit une nappe conductrice 10 en contact avec une première face de la cellule photovoltaïque C, par exemple sa face avant FAV. Il est également possible d'avoir, dans le même temps, sur une deuxième face de la cellule C opposée à la première face, par exemple sa face arrière FAR, une autre nappe 10' également formée d'une pluralité de fils conducteurs parallèles et distincts, et déplaçables individuellement un ou plusieurs actionneurs d'un dispositif d'actionnement tel décrit précédemment. Le nombre de contacts maintenus sur la deuxième face, autrement dit le nombre d'éléments conducteurs de l'autre nappe 10' est contrôlable par le système de contrôle décrit précédemment.

Dans un exemple de réalisation particulier illustré sur la figure 8, la pression exercée par les fils conducteur d'une nappe 10 disposée sur la face avant FAV d'une cellule photovoltaïque C, et/ou par les fils conducteurs d'une autre nappe 10' disposée sur la face arrière FAR de la cellule photovoltaïque C peut être mesurée par le biais de capteurs 81, 83 d'effort ou de pression. De tels capteurs peuvent se présenter sous forme de rubans en couche mince et peuvent permettre de prévenir une éventuelle casse de la cellule C du fait d'une pression trop forte exercée par la ou les nappes 10 et/ou 10'.

Dans le cas où l'on agence deux nappes conductrices 10, 10', une sur la face avant FAV et l'autre sur la face arrière FAR d'une cellule, on peut également prévoir de décaler les fils de la nappe 10 par rapport aux fils de l'autre nappe 10'. Ainsi, afin de limiter les risques de court-circuit on agence les nappes de préférence de sorte qu'un fil conducteur de la nappe 10 ne se trouve pas dans un même plan orthogonal au plan principal de la cellule qu'un fil conducteur de l'autre nappe 10'.

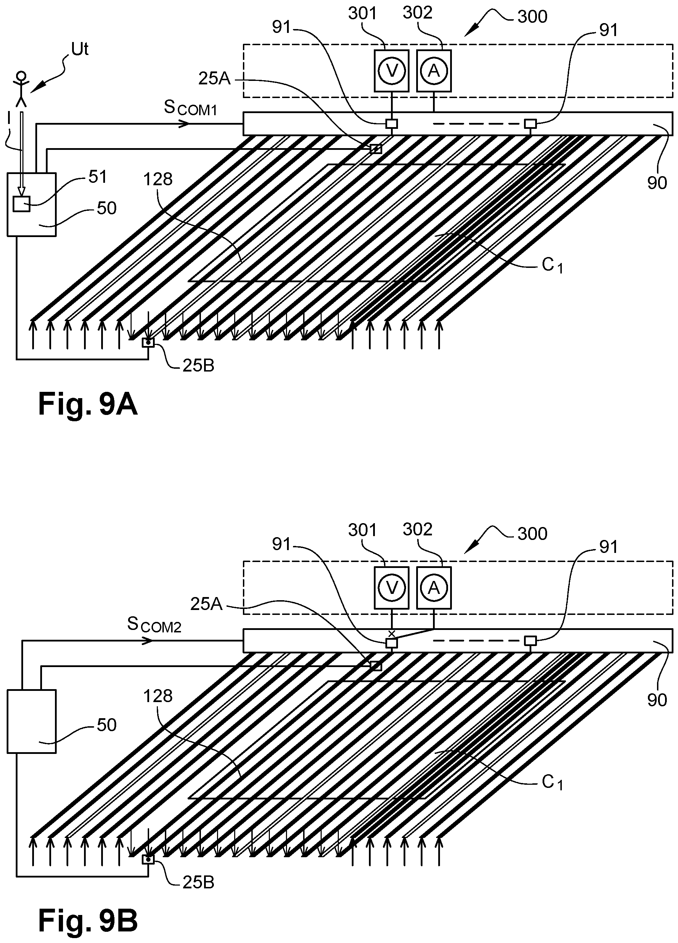

Dans un exemple de réalisation particulier illustré sur les figures 9A et 9B, le dispositif de contrôle 50 tel que décrit précédemment en lien avec la figure 4 est ici configuré en outre pour piloter un dispositif de commutation 90 connecté à la nappe 10 de fils conducteurs 11, 12 et agencé entre cette nappe 10 et un appareil de mesure 300 auquel le dispositif de commutation 90 est également connecté.

Ce dispositif de commutation 90 est formé d'une pluralité d'éléments de commutation 91, chaque élément 91 de commutation étant associé à un fil conducteur donné 128 et permettant de connecter ce fil conducteur donné 128 de la nappe 10 lorsqu'il en position de mesure à l'un d'un dispositif de mesure courant et d'un dispositif de mesure de l'appareil 300 tout en déconnectant ce fil conducteur donné 128 de l'autre du dispositif de mesure courant et du dispositif de mesure.

Ainsi, lorsque le dispositif de contrôle 50 reçoit une instruction provenant par exemple de son interface homme-machine, d'association d'un fil conducteur donné 128 de la nappe 10 à un premier type de dispositif de mesure, par exemple de mesure de tension, à un fil conducteur donné 2, son unité de traitement couplée à son circuit d'interface produisent un signal électrique ou électronique de commande à destination du dispositif de commutation 50, de sorte à déclencher un changement de configuration de l'élément de commutation associé au fil conducteur donné 128.

Sur la figure 9A, un signal de commande Scom1 à destination du dispositif de commutation 90 permet de déclencher un changement de configuration d'un élément de commutation 91 auquel le fil conducteur 128 donné est relié, cet élément de commutation 91 adoptant alors consécutivement une première configuration permettant de relier le fil conducteur 128 donné à un dispositif 301 (ou voie) de mesure de tension.

Sur la figure 9B, un signal de commande Scom2 à destination du dispositif de commutation 90 permet de déclencher un changement de configuration de l'élément de commutation 91 auquel le fil conducteur 128 donné est relié, cet élément de commutation 91 adoptant alors une deuxième configuration permettant de relier le fil conducteur 128 donné cette fois à un dispositif 302 (ou voie) de mesure de courant.

Un tel pilotage peut être réalisé individuellement fil par fil, le dispositif de contrôle 50 étant configuré pour permettre d'associer un ou plusieurs fils conducteurs de la nappe 10 chacun à un dispositif de mesure de tension, tandis qu'un ou plusieurs autres fils conducteurs sont associés chacun à un dispositif de mesure de courant. On peut ainsi modifier rapidement la configuration du dispositif de mesure sans devoir effectuer de débranchement ou de démontage, ce qui permet de pouvoir enchainer rapidement différentes mesures. Lorsqu'une autre nappe de fils conducteurs (non représentée sur cette figure) est prévue sur une face opposée à celle sur laquelle se situe la nappe 10, cette autre nappe est également connectée au dispositif de commutation 90 pour pouvoir également sélectionner, pour chaque fil conducteur de cette autre nappe, le moyen de mesure, de courant ou de tension auquel on l'associe.

Ainsi, un ou plusieurs éléments de commutation 91 sont contrôlés par exemple pour adopter une première configuration tandis qu'un ou plusieurs éléments de commutation 91 sont adoptés pour adopter une deuxième configuration.

Un exemple particulier de dispositif de commutation 90 comporte un agencement matriciel tel que sur la figure 10.

Chaque fil conducteur, lorsqu'il est en contact avec la cellule photovoltaïque autrement dit en position de mesure peut être relié à une colonne Ci (ou rangée verticale) de l'agencement matriciel, tandis que les lignes (ou rangées horizontales) sont directement reliées aux voies ou dispositifs de mesure, soit de tension soit de courant.

Sur cette figure, seules 16 colonnes sont représentées, mais le dispositif de commutation peut être prévu avec un nombre de voies plus important, par exemple de 60.

Il est également possible de regrouper plusieurs fils conducteurs dédiés à la mesure de courant I à une même colonne afin de simplifier la mesure.

Les éléments de commutation 91 du dispositif de commutation 90 sont situés chacun à l'intersection d'une ligne et d'une colonne à une ligne de mesure (I ou U) et sont typiquement formés d'un ou plusieurs interrupteurs.

Chaque élément 91 de commutation est ici configuré pour, alternativement adopter une première configuration connectant une entrée 92e; 94e apte à être couplée à un fil conducteur de la nappe à une première sortie 93s; 95s apte à être reliée à un dispositif de mesure de courant tout en déconnectant ladite entrée d'une deuxième sortie 97s; 99s apte à être reliée à un dispositif de mesure de tension, et une deuxième configuration connectant ladite entrée 92e; 94e à ladite deuxième sortie 97s; 99s tout en déconnectant ladite entrée de ladite première sortie 93s; 95s.

Le dispositif de contrôle 50 d'un tel dispositif de commutation 90 est configuré en outre pour déclencher une modification de la configuration de chaque élément de commutation 91, autrement dit une ouverture ou une fermeture de ses interrupteurs, afin de modifier l'association entre au moins un fil conducteur relié en entrée et un moyen de mesure de tension ou de courant. Le moyen de mesure de courant peut être associé et donc connecté au fil conducteur dans une configuration donnée (par exemple correspondant à une ouverture de ses interrupteurs) de l'élément de commutation 91 tandis que le moyen de mesure de tension est déconnecté de ce fil conducteur, et dans une autre configuration de l'élément de commutation 91 (par exemple correspondant à une fermeture de ses interrupteurs), le moyen de mesure de tension est associé au fil conducteur et donc connecté à ce fil, tandis que le moyen de mesure de tension est déconnecté de ce fil conducteur.

Un tel dispositif de commutation a pour avantage de pouvoir permettre de modifier rapidement le nombre de contacts I et de contacts U et ainsi d'adapter rapidement la proportion de contacts I et de contacts U.

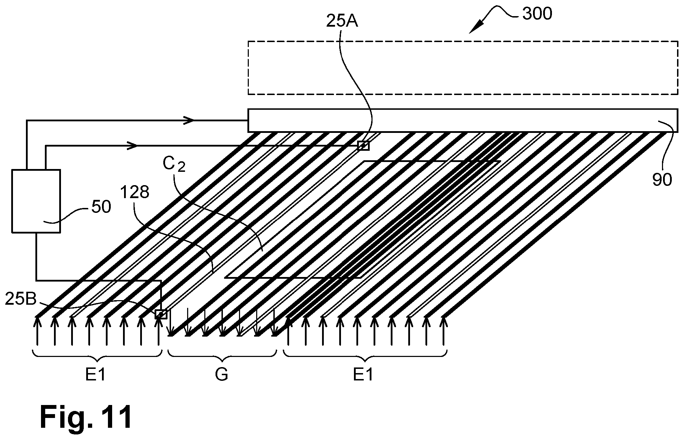

Une fois une ou plusieurs mesures de courant et/ou de tension effectuée(s) sur une cellule photovoltaïque C1, on peut ensuite vouloir effectuer une ou plusieurs mesures de courant et/ou de tension sur une autre cellule. Dans l'exemple de réalisation illustré sur la figure 11, une autre cellule C2, de format différent de la cellule précédemment testée est mise en place.

Pour pouvoir s'adapter au format, dans cet exemple plus petit que celui de la cellule C1, on déplace un ensemble E1 de fils conducteurs de ladite nappe 10 hors de la position de mesure de sorte à déconnecter cet ensemble E1 de la cellule photovoltaïque C2 tout en maintenant un groupe G de fils conducteurs de la nappe dans la position de mesure. Un ou plusieurs premiers fils conducteurs du groupe G sont alors connectés à un dispositif (ou voie) de mesure de courant de l'appareil de mesure 300, tandis qu'un ou plusieurs ou plusieurs deuxièmes fils conducteurs sont connectés à un dispositif de mesure de tension de l'appareil de mesure 300.

On peut alors modifier la configuration d'un ou plusieurs éléments de commutation donnés du dispositif de commutation, de sorte à modifier le nombre de fils conducteurs du groupe G qui sont connectés à un dispositif (ou voie) de mesure de tension de l'appareil et à modifier le nombre de fils conducteurs du groupe G connectés à un dispositif (ou voie) de mesure de courant.

On peut ensuite mesurer le courant traversant au moins un fil conducteur donné 128 du groupe G ou la tension entre les extrémités d'un fil conducteur donné 128 du groupe G en contact avec la cellule photovoltaïque C2, cette dernière étant dans le même temps maintenue sous illumination par le biais d'une source lumineuse (non représentée sur la figure 11).

Pour pouvoir réaliser une mesure IV viable, il peut s'avérer préférable de conserver un même ratio donné, par exemple de l'ordre de 15%, entre un nombre NI de fils conducteurs formant des contacts I par rapport à un nombre NU de fils conducteurs formant des contacts U. Le dispositif de contrôle et le dispositif de commutation associé permettent de conserver ce ratio aisément et rapidement quel que soit le format de cellule mis en place en contact avec la ou les nappes de fils conducteurs.

Le dispositif de contrôle permet également de piloter la répartition des contacts sur la cellule. Ainsi, lorsqu'on mesure une cellule G12, on prévoit par exemple 7 contacts U pour 40 contacts I, et lorsqu'on mesure une cellule de format M2, 5 contacts U pour 30 contacts I.

Pour s'adapter à des ½ cellules, il est intéressant de pouvoir choisir la nature du contact entre I et U associé à un même fil conducteur afin de conserver le ratio précité. Un tel dispositif permet ainsi de s'adapter aisément à un nombre importants de formats de mesure de cellule.

## Revendications

1. Dispositif pour établir un contact électrique entre une cellule photovoltaïque et au moins un dispositif de mesure de tension et/ou de courant, comprenant :
- une nappe (10) de fils conducteurs (12 ; 12I, 12U ; 128) distincts et déplaçables qui, dans une position dite « de mesure » sont aptes à être disposés en contact avec une première face (FAV, FAR) d'une cellule photovoltaïque (C, C1, C2) et dans une position dite « de déconnexion » sont aptes à être maintenus à distance de la première face (FAV, FAR) d'une cellule photovoltaïque et avantageusement parallèlement à cette première face,
- un dispositif d'actionnement (25) doté d'un ensemble d'actionneurs (25A, 25B) des fils conducteurs de la nappe (10), chaque actionneur (25) étant associé à un fil conducteur donné (12I, 12U, 128) de la nappe et configuré pour permettre de déplacer le fil conducteur donné, entre une première position parmi la position de mesure et la position de déconnexion et une deuxième position parmi la position de déconnexion et la position de mesure et distincte de la première position, et pour déplacer le fil conducteur donné entre la deuxième position et la première position, le dispositif d'actionnement (25) étant configuré pour maintenir un premier fil conducteur de la nappe associé à au moins un premier actionneur dans la première position tandis qu'un deuxième fil conducteur de la nappe associé à au moins un deuxième actionneur est maintenu dans la deuxième position.

2. Dispositif selon la revendication 1, comprenant en outre :
- un dispositif de commutation(90) couplé aux fils conducteurs (12, 12U, 12I, 128) de la nappe (10) et comportant un ensemble d'éléments (91) de commutation, chaque élément (91) de commutation étant configuré pour alternativement adopter une première configuration connectant une entrée (92e; 94e), apte à être couplée à un fil conducteur de la nappe (10), à une première sortie (92s; 94s), apte à être reliée à un dispositif de mesure de courant (302), tout en déconnectant ladite entrée d'une deuxième sortie (92s; 94s), apte à être reliée à un dispositif de mesure de tension (301), et une deuxième configuration connectant ladite entrée (92e; 94e) à ladite deuxième sortie tout en déconnectant ladite entrée de ladite première sortie.

3. Dispositif selon la revendication 2, dans lequel, dans la position de mesure, les fils conducteurs de ladite nappe (10) sont disposés en contact avec une première face, entre une face avant (FAV) et une face arrière (FAR) de la cellule photovoltaïque (C, C₁, C₂), le dispositif comprenant en outre :
- une deuxième nappe (10') de fils conducteurs distincts qui, dans la position dite « de mesure » sont disposés en contact avec une deuxième face entre la face arrière et la face avant distincte de la première face, le dispositif d'actionnement (50) étant doté en outre d'un deuxième ensemble d'actionneurs pour déplacer individuellement les fils de la deuxième nappe (10'), la deuxième nappe étant couplée au dispositif de commutation.

4. Dispositif selon l'une des revendications 1 à 3, lorsque rattachée à la revendication 2, comprenant en outre :
- un dispositif de contrôle (50) du dispositif d'actionnement (25) et/ou du dispositif de commutation (90), le dispositif de contrôle (50) étant muni d'une unité de traitement (52) couplée à un circuit (54) d'interface, l'unité de traitement (52) couplée au circuit (54) d'interface étant configurés pour :
- émettre un signal (S_{AC}) de commande d'actionneur(s) (25A, 25B) dudit dispositif d'actionnement (25) à destination d'au moins un actionneur donné pour déclencher un déplacement d'au moins un fil conducteur donné par ledit actionneur donné,
et/ou
- émettre un signal de commande (S_{COM1}, S_{COM2}) du dispositif de commutation (90) de sorte à déclencher un changement de configuration d'au moins un élément de commutation (91) donné et faire commuter l'élément de commutation donné de la première configuration vers la deuxième configuration ou de la deuxième configuration vers la première configuration.

5. Dispositif selon la revendication 4, dans lequel le dispositif de contrôle (50) comprend en outre une interface (51) homme-machine pour recevoir une instruction de déplacement de fil en provenance d'un utilisateur (U) indiquant qu'au moins un fil conducteur donné (128) de ladite nappe est à déplacer vers ou hors d'une position de mesure, l'unité de traitement (52) couplée au circuit (54) d'interface étant configurée pour, consécutivement à la réception de l'instruction de déplacement de fil, émettre un signal de commande d'actionneur au dispositif d'actionnement (25) de sorte à déclencher un déplacement dudit fil conducteur donné par au moins un actionneur (25) associé au fil conducteur donné.

6. Dispositif selon l'une des revendications 4 ou 5, dans lequel le dispositif de contrôle (50) comprend en outre une interface (51) homme-machine pour recevoir une instruction d'association de fil à un type de dispositif mesure donné entre un dispositif de mesure de tension et un dispositif de mesure de courant, l'unité de traitement (52) couplée au circuit (54) étant configurés pour consécutivement à la réception de l'instruction d'association de fil à un type de dispositif de mesure donné, émettre un signal électrique ou électronique de commande à destination du dispositif de commutation (90), de sorte à déclencher un changement de configuration d'au moins un élément de commutation donné associé au fil conducteur donné.

7. Dispositif selon l'une des revendications 4 à 6, le dispositif de contrôle (50) étant configuré pour déclencher un déplacement d'un ensemble (E1) de fils conducteurs de ladite nappe (10) hors de la position de mesure de sorte à déconnecter ledit ensemble (E1) de ladite cellule photovoltaïque tout en maintenant un groupe (G) de fils conducteurs de ladite nappe dans la position de mesure ou à déplacer dans la position de mesure ledit ensemble (E1) de fils conducteurs de sorte à connecter ledit ensemble avec ladite cellule photovoltaïque tout en maintenant un groupe (G) de fils conducteurs de ladite nappe dans la position de mesure, le dispositif de contrôle (50) étant configuré en outre pour déclencher une connexion d'un ou plusieurs premiers fils conducteurs dudit groupe (G) à un dispositif de mesure de courant en mettant un ou plusieurs premiers éléments de commutation (91) du dispositif de commutation (90) dans une première configuration, tandis qu'un ou plusieurs deuxièmes fils conducteurs dudit groupe (G) sont connectés à un dispositif de mesure de tension par l'intermédiaire d'un ou plusieurs deuxièmes éléments de commutation dudit dispositif de commutation (90) mis dans une deuxième configuration,
le dispositif de contrôle étant configuré en outre pour déclencher une modification de la configuration d'un ou plusieurs éléments de commutation (91) donnés parmi lesdits premiers éléments de commutation et/ou lesdits deuxièmes éléments de commutation dudit dispositif de commutation.

8. Dispositif selon l'une des revendications 1 à 7, dans lequel dans la position de mesure, une première région d'extrémité du fil conducteur donné est maintenue contre un premier capteur de pression (81) et une deuxième région d'extrémité du fil conducteur est maintenue contre un deuxième capteur de pression (83), pour mesurer la pression exercée par le fil conducteur donné sur la cellule photovoltaïque (C, C1, C2).

9. Dispositif selon l'une des revendications 1 à 8, dans lequel les actionneurs (25A, 25B) comportent :
- un premier électro-aimant destiné à être placé en regard d'une première région d'extrémité d'un fil conducteur et un deuxième électro-aimant destiné à être placé en regard d'une deuxième région d'extrémité de ce fil conducteur ;
ou
- un premier vérin destiné à être placé en regard d'une première région d'extrémité d'un fil conducteur et un deuxième vérin destiné à être placé en regard d'une deuxième région d'extrémité de ce fil conducteur.

10. Procédé pour tester électriquement au moins une cellule photovoltaïque (C₂) à l'aide d'un dispositif selon l'une des revendications 2 à 7 ou selon l'une des revendications 8 ou 9 pris rattachée à la revendication 2, le procédé comprenant les étapes suivantes :
- Une première étape consistant à :
- déplacer un ensemble de fils conducteurs de ladite nappe hors de la position de mesure de sorte à déconnecter une première cellule photovoltaïque (C₂) dudit ensemble de fils conducteurs tout en maintenant un groupe de fils conducteurs de ladite nappe dans la position de mesure sur la première cellule photovoltaïque (C₂) ledit déplacement dudit un ensemble de fils conducteurs étant effectué, de préférence en translation et selon une direction orthogonale à un plan principal de la cellule, ledit déplacement dudit un ensemble de fils conducteurs étant un déplacement hors de la position de mesure effectué de sorte à aboutir à une deuxième position, ou
- déplacer dans la position de mesure ledit ensemble de fils conducteurs de sorte à connecter ledit ensemble avec ladite première cellule photovoltaïque (C₂) tout en maintenant un groupe de fils conducteurs de ladite nappe dans la position de mesure, un ou plusieurs premiers fils conducteurs dudit groupe étant connectés à un dispositif de mesure de courant par l'intermédiaire d'éléments de commutation du dispositif de commutation mis dans la première configuration, tandis qu'un ou plusieurs ou plusieurs deuxièmes fils conducteurs dudit groupe sont connectés à un dispositif de mesure de tension par l'intermédiaire d'éléments de commutation dudit dispositif de commutation mis dans la deuxième configuration, puis,
- une deuxième étape consistant à
- modifier la configuration d'un ou plusieurs éléments de commutation (91) donnés dudit dispositif de commutation (90), de sorte à modifier le nombre de fils conducteurs dudit groupe qui sont connectés à un dispositif de mesure de tension et à modifier le nombre de fils conducteurs dudit groupe connectés à un dispositif de mesure de courant, puis,
- une troisième étape consistant à :
- mesurer le courant traversant au moins un fil conducteur donné dudit groupe ou la tension entre les extrémités d'au moins un fil conducteur donné dudit groupe en contact avec la première cellule photovoltaïque, tandis que la première cellule photovoltaïque est maintenue sous illumination,
ledit ensemble de fils conducteurs étant maintenu dans ladite deuxième position lors de la mesure de courant ou de tension effectuée sur ledit au moins un fil conducteur donné dans le cas où ledit ensemble de fils conducteurs de ladite nappe a été déplacé hors de la position de mesure à la première étape.

11. Procédé selon la revendication 10, dans lequel préalablement au déplacement dudit un ensemble de fils conducteurs de ladite nappe, le procédé comprend une ou plusieurs étapes consistant à :
- disposer la nappe (10) de fils conducteurs en contact avec une autre cellule photovoltaïque (C₁), ledit ensemble de fils conducteurs étant en contact avec ladite autre cellule (C₁) et mesurer au moins un courant ou une tension à l'aide de ladite nappe, tandis que l'autre cellule photovoltaïque est maintenue sous illumination.

12. Procédé selon l'une des revendication 11, dans lequel l'autre cellule (C₁) a un format différent de celui de ladite première cellule photovoltaïque (C₂).
